# EUROPÄISCHE PATENTSCHRIFT

(11) **EP 0 332 746 B1**
(45) Veröffentlichungstag und Bekanntmachung des Hinweises auf die Patenterteilung: **01.06.1994**
(21) Anmeldenummer: 88118552.4
(22) Anmeldetag: 08.11.1988
(51) Int. Cl.: H02G 3/26, F16L 3/24, H02G 3/04

(54) **Ausleger für Trag- oder Aufhängevorrichtungen für Kabel, Rohre und dergleiche**
Side bracket for support or suspension devices for cable, tubing and the like
Console latérale pour dispositif de support ou de suspension pour câbles tuyaux et objets similaires

(30) Priorität: 18.03.1988 DE 3809079
(43) Veröffentlichungstag der Anmeldung: 20.09.1989
(73) Patentinhaber: Rieth & Co. GmbH, D-73230 Kirchheim (DE)
(72) Erfinder: Mätzler, Eberhard, Dipl.-Ing., 7311 Notzingen-Wellingen (DE); Wennrich, Hans-Oswald, 7311 Ohmden (DE); Fink, Ewald, 7321 Albershausen (DE)
(74) Vertreter: Rüger, Rudolf, Dr.-Ing.

(56) Entgegenhaltungen:
- DE-B- 1 236 041
- FR-A- 2 067 618
- FR-A- 2 077 291
- FR-A- 2 234 503
- FR-A- 2 450 523
- GB-A- 2 114 820

## Beschreibung

Die Erfindung betrifft eine Trag- oder Aufhängevorrichtung für Kabel, Rohre u.dgl. mit den Merkmalen des Oberbegriffs des Anspruches 1.

Bei derartigen, aus der FR-A-24 50 523 bekannten Trag- oder Aufhängevorrichtungen ist an dem stielseitigen Ende des Auslegers eine Lasche durch Punktschweißen angebracht, die zur Erzielung der notwendigen Festigkeit mit einer in Längsrichtung verlaufenden Sicke versehen ist. Diese Lasche überdeckt mit einem ihrer beiden Abschnitte das Rückenteil des Auslegers, während der andere Abschnitt zur Anbringung an dem Stiel bzw. einer Säule vorgesehen ist. Dieser Abschnitt der Lasche enthält Bohrungen, durch die Schrauben hindurchführen, die in den T-Nuten des Stiels zu befestigen sind.

Die beiden Schweißpunkte, über die das verbindungsstück mit dem Rückenteil des Auslegers stoffschlüssig verbunden ist, ist in der Lage, sowohl die Querkräfte als auch die Biegemomente von dem Ausleger in den Stiel einzuleiten.

Diese sehr robuste und an sich einfache automatisch herzustellende Verbindung zwischen dem Verbindungsstück und dem Ausleger ist nachträglich nicht mehr änderbar. Hieraus resultiert eine große Lagerhaltung, da die Abmessungen der Ausleger an das Gewicht des zu verlegenden Installationsmaterials und an die Menge angepaßt sein müssen, andererseits weit auskragende Ausleger nicht notwendigerweise auch hohe Lasten zu tragen haben. Außerdem gibt es unterschiedliche Stielgeometrien, an denen die Ausleger zu befestigen sind. Entsprechend groß ist die Vielfalt der lagermäßig vorzuhaltenden Kombinationen aus Ausleger und Verbindungsstück, wenn beide herstellerseitig unlösbar miteinander verbunden sind.

Außerdem kann bei einer Schweißverbindung zwischen den beiden genannten Teilen der Korrosionsschutz beispielsweise in Gestalt einer Verzinkung erst ganz zum Schluß aufgebracht werden, da beim Schweißen verzinkter Teile einerseits giftige Dämpfe entstehen und andererseits die Zinkschicht in der Umgebung der Schweißstelle wegbrennt, so daß diese sonst ungeschützt ist. Es ist deswegen ausgeschlossen, die Teile aus bereits verzinkten Halbfabrikaten (Coil) zu fertigen.

Schließlich ist es aus der Praxis noch bekannt, das Verbindungsstück und den Ausleger einstückig herzustellen. In diesem Fall muß die wandstärke des verwendeten Materials sich nach demjenigen Teil richten, an dem die größten Kräfte auftreten, nämlich dem Verbindungsstück. Der Ausleger ist dann üblicherweise stark überdimensioniert, was aber nichts zur Festigkeit beiträgt, sondern nur die Materialkosten erhöht.

Bei einer anderen Verbindungstechnik, wie sie aus der FR-A-20 67 618 bekannt ist, hat der Ausleger ein U-förmiges Profil, wobei die Kabelpritschen oder Kabelrinnen auf den freien Stirnkanten der das U bildenden Schenkel aufliegen. Das Basis- oder Rückenteil verläuft bei dieser Anordnung angenähert parallel zu der Unterseite der Kabelpritsche. Sie seitlichen Schenkel sind in Richtung auf den Stiel gegenüber dem Rückenteil verlängert, so daß der Ausleger mit diesen Teilen seitlich an dem Stiel vorbeiführt, während die dem Stiel benachbarte Kante des Rückenteils am Stiel stumpf anliegen kann.

Die Fixierung des Auslegers am Stiel erfolgt mit einer Schraube, die durch die beiden Schenkel des Auslegers und den dazwischen hindurchlaufenden Stiel hindurchführt. Auf diese Weise werden die Momente durch Zusammenwirken der Halteschraube und der an dem Stiel anliegenden Kante des Rückenteils in den Stiel eingeleitet.

Aus der DE-B-12 36 041 ist es schließlich bekannt, gelochte I-Schienen mit Hilfe von Laschen stumpf und auf Stoß miteinander zu verbinden. Die Laschen liegen hierzu flach auf den Stegen der I-förmigen Schienen auf und sind an den Löchern in dem Steg der I-Profilschiene festgeschraubt.

Ausgehend hiervon ist es Aufgabe der Erfindung, eine Tragkonstruktion zu schaffen, die eine flexible Paarung zwischen dem Verbindungsstück und dem Ausleger gestattet, wobei die Art der Befestigung der beiden Teile aneinander sehr einfach sein soll.

Diese Aufgabe wird erfindungsgemäß durch die Vorrichtung mit den Merkmalen des Anspruches 1 gelöst.

Bei dieser neuen Art der Befestigung des Auslegers an dem verbindungsstück braucht bei der Montage nur ein einziges Element eingesetzt zu werden, um den Ausleger hinsichtlich aller wesentlichen an ihm angreifenden Kräfte zu halten. Das Kipp- oder Biegemoment wird über das Verbindungselement als Querkraft übertragen und über den unteren Flansch des Auslegers in den Stiel eingeleitet. Das Verbindungsstück selbst braucht hierbei kein Biegemoment zu übertragen, da der Ausleger hinsichtlich dieser Kräfte unmittelbar mit dem Stiel zusammenwirkt. Durch Wahl des Abstandes der beiden Flansche an dem Ausleger läßt sich außerdem die Größe der Druckkraft, die an der Widerlagerkante auftritt, auf einfache Weise steuern, um die Flächenbelastungen am Stiel oder am Ausleger klein zu halten. Es lassen sich damit auch Teile miteinander verbinden, die aus nicht verschweißbaren Materialien und/oder Beschichtungen bestehen.

In einer besonders einfachen Ausführungsform besteht das Verbindungsstück aus einem etwa Z-förmig abgekröpften Blechformteil, um die Flansche des Auslegers bei an dem Steg des Stiels angebrachten Verbindungsstück in den Bereich des Flansches des Stiels zu bringen.

Das bolzenförmige Verbindungselement ist im einfachsten Falle eine Gewindeschraube mit aufgeschraubter Mutter, die, um die Funktion zu erfüllen, noch nicht einmal fest angezogen zu werden braucht. Leichtes Anziehen von Hand genügt völlig, um die auftretenden Scherkräfte zu übertragen.

Wenn besonders hohe Kräfte übertragen werden sollen, ohne den Korrosionsschutz am Stiel zu durchschneiden, ist es zweckmäßig, wenn das Verbindungsstück eine Lasche aufweist, die zwischen der Widerlagerkante des Auslegers und dem Flansch des Stieles liegt. Die von der Widerlagerkante des Auslegers ausgehende Kraft wird damit auf eine größere Fläche am Stiel verteilt. Insbesondere gestattet diese Ausführungsform des Verbindungsstücks die Verwendung von dünnwandigen Stielen, bei denen die notwendige Biegesteifigkeit durch mehrfaches Umbiegen in Längsrichtung erhalten wird. Dies spart zwar Gewicht, macht die Stiele jedoch empfindlich gegen seitliches Einbeulen beim Auftreten von zu großen Kräften auf zu kleinen Flächen, wie sie die Kanten von Auslegern darstellen.

In der Zeichnung sind Ausführungsbeispiele des Gegenstandes der Erfindung dargestellt. Es zeigen:
- Fig. 1: eine an einer Decke eines Gebäudes befestigte Tragvorrichtung gemäß der Erfindung in einer Seitenansicht,
- Fig. 2: den Ausleger und das Verbindungsstück der Tragvorrichtung nach Fig. 1 in einer perspektivischen Explosionsdarstellung,
- Fig. 3: den Ausleger nach Fig. 2 im an einem Stiel der Tragvorrichtung nach Fig. 1 montierten Zustand in einer Draufsicht,
- Fig. 4: ein weiteres Ausführungsbeispiel eines Auslegers der Tragvorrichtung nach Fig. 1 in einer perspektivischen Explosionsdarstellung,
- Fig. 5: das Verbindungsstück des Auslegers nach Fig. 4 in einer perspektivischen Darstellung der anderen Seite und
- Fig. 6: den Ausleger nach Fig. 4 im montierten Zustand in einer Draufsicht.

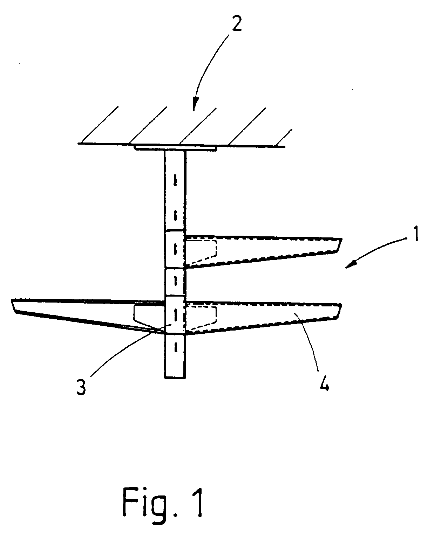

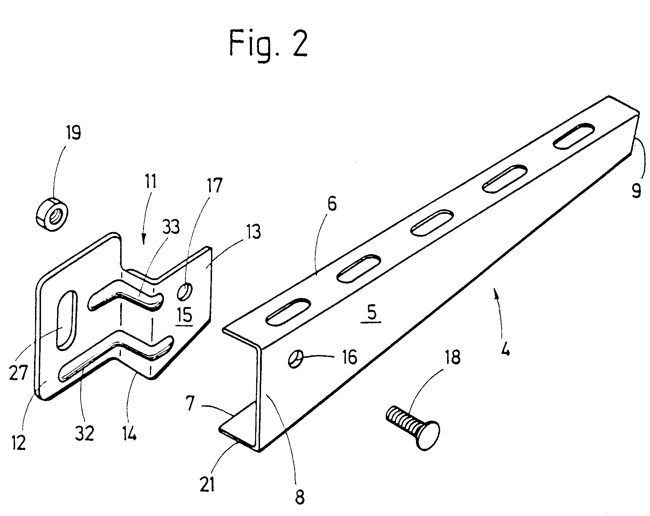

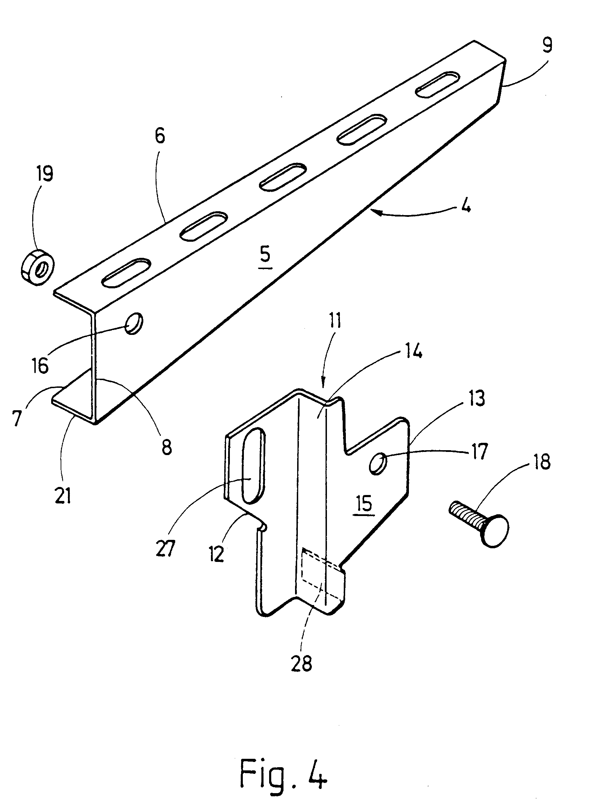

Fig. 1 zeigt eine Trag- und Aufhängevorrichtung 1 für Kabel, Rohre u.dgl., die entweder unmittelbar auf der Tragvorrichtung 1 oder in Pritschen und Rinnen angeordnet sind, die auf der Tragvorrichtung 1 gehaltert sind. Die Trag- und Aufhängevorrichtung 1 nach Fig. 1 ist an einer Struktur eines Gebäudes in Gestalt einer Decke 2 befestigt und enthält einen vertikal verlaufenden Stiel 3, an dem zu beiden Seiten in entgegengesetzte Richtung ragend mehrere Ausleger 4 gehaltert sind. Eine Ausführungsform der Ausleger 4 ist in den Fig. 2 und 3 im einzelnen dargestellt. Sie haben, wie die Figur erkennen läßt, ein im wesentlichen U- oder C-förmiges Querschnittsprofil mit einem im wesentlichen ebenen Rückenteil 5, an dessen oberer und an dessen unterer Kante rechtwinklig zu dem Rückenteil 5 zwei etwa gleich tiefe Flansche 6 und 7 angeformt sind, die sich in Längsrichtung des Rückenteils 5 über die gesamte Länge des Auslegers 4 erstrecken. Beide Flansche 6 und 7 weisen in dieselbe Richtung.

Das Rückenteil 5 verjüngt sich, ausgehend von einem Ende 8 zu dem anderen entgegenliegenden Ende 9, derart, daß der obere und der untere Flansch 6 und 7 in Richtung auf das Ende 9 zueinander konvergieren. Um, wie Fig. 3 erkennen läßt, den Ausleger 4 an dem Stiel 3 zu befestigen, ist ein gekröpftes Knotenblech 11 vorgesehen, das zwei zueinander parallele Halteflansche 12 und 13 bildet, die durch ein rechtwinklig zu den beiden Halteflanschen 12 und 13 verlaufendes Zwischenstück 14 einstückig miteinander verbunden sind. Die Tiefe des Zwischenstücks 14 richtet sich, wie sich aus der weiter unten stehenden Beschreibung ergibt, nach der Gestalt des Stieles 3.

Der Halteflansch 13 bildet auf seiner dem Ausleger 4 zugekehrten sichtbaren Außenseite 15 eine plane Anlagefläche für die zwischen den beiden Flanschen 6 und 7 befindliche Innenfläche des Rückenteils 5. Die Höhe des Halteflansches 13 entspricht im wesentlichen dem Abstand, den die beiden Flansche 6 und 7 des Auslegers 4 an dem Ende 8 haben, das im montierten Zustand dem Stiel 3 zugekehrt ist. Um den Halteflansch 13 mit dem Ausleger 4 zu verbinden, ist in dem Rückenteil 5 in der Nähe des oberen Flansches 6 eine Bohrung 16 enthalten, die mit einer korrespondierenden Bohrung 17 in dem Halteflansch 13 fluchtet. Durch die miteinander fluchtenden Bohrungen 16 und 17 führt eine Kopfschraube 18, auf deren Gewinde eine Mutter 19 aufgeschraubt ist. Der Kopf der Schraube 18 befindet sich auf der in Fig. 2 sichtbaren Außenseite des Auslegers 4, während die Mutter 19 auf der der Anlagefläche 15 gegenüberliegenden Fläche des Halteflansches 13 aufliegt.

Die Schraube 18 wirkt bei Belastung des Auslegers 4 gleichsam als Scharnier- oder Drehpunkt und wird lediglich auf Scherung beansprucht. Die Drehmomente, die bei der Belastung des Auslegers 4 auftreten, werden, als Querkräfte, über eine Widerlagerkante 21 in den Stiel 3 eingeleitet. Die Widerlagerkante 21 befindet sich an dem dem Stiel 3 zugekehrten Ende 8 des Auslegers 4 und ist von dem unteren, schräg verlaufenden Flansch 9 gebildet. Der Abstand, den die Bohrung 16 von der hinteren Kante 8 aufweist, ist deswegen auch derart bemessen, daß, wenn die Widerlagerkante 21 an dem Stiel 3 anliegt, der obere Flansch 6 den gewünschten horizontalen Verlauf aufweist, also sich rechtwinklig zu dem Stiel 3 erstreckt.

Der andere Halteflansch 12 dient der Befestigung des Verbindungsstückes an dem Stiel 3, dessen Querschnitt sich aus Fig. 3 ergibt. Der Stiel 3 ist durchgehend über seine gesamte Länge Z-förmig profiliert und enthält einen über die Längsrichtung durchgehenden Steg 22, an dessen in Längsrichtung durchgehende Kanten zwei Stielflansche 23 und 24 rechtwinklig zu dem Steg 22 verlaufend angeformt sind. Die beiden Stielflansche 23 und 24 erstrecken sich, bezogen auf die durch den Steg 22 definierte Ebene, in entgegengesetzten Richtungen und haben gegenüber dem Steg 22 dieselbe Höhe. An die Höhe dieser beiden Flansche 23 und 24 ist die Höhe des Zwischenstücks 14 des Verbindungsstücks 11 angepaßt, derart, daß im montierten Zustand die rechtwinklig zu der Längserstreckung des Auslegers 4 verlaufende Widerlagerkante 21 vor einem der beiden Stielflansche 23 und 24 zu liegen kommt.

Der Stiel 3 enthält ferner in seinem Steg 22 eine Vielzahl äquidistant verteilter Löcher 25, die längs der Mittellinie des Steges angeordnet sind und die der Aufnahme einer Befestigungsschraube 26 dienen.

Bei der Montage des beschriebenen Auslegers 4 wird nach der Befestigung des Stiels 3 an der Gebäudestruktur 2 ein Knotenblech 11 ausgewählt, das in der Lage ist, die an dem Ausleger 4 auftretende Kraft in den Stiel 3 einzuleiten. Das ausgesuchte Knotenblech 11 wird mit seinem Halteflansch 13 an dem Ausleger 4 befestigt, und zwar so, daß der Halteflansch 13 an dem Rückenteil 5 zwischen den beiden Flanschen 6 und 7 zu liegen kommt. Daran anschließend wird die Gewindeschraube 18 durch die miteinander fluchtende Bohrungen 16 und 17 gesteckt und es wird die Mutter 19 auf den Gewindebolzen 18 aufgeschraubt. Hierdurch wird zwischen dem Knotenblech 11 und dem Ausleger 4 eine formschlüssige Verbindung erhalten, die zunächst noch nicht in der Lage ist, ein Drehmoment zu übertragen. Diese Kraftaufnahmemöglichkeit entsteht erst, wenn der Ausleger 4 mittels des Verbindungsstückes 11 an dem Stiel 3 befestigt ist, wozu der Halteflansch 12 in der in Fig. 3 gezeigten Weise auf den Steg 22 des Stiels 3 aufgelegt wird. Da der Abstand, den ein in dem Halteflansch 12 vorgesehenes Langloch 27 von dem Zwischenstück 14 aufweist, etwa genau so groß ist, wie der Abstand der Löcher 25 in dem Stiel 3 von der von der Mittellinie wegweisenden Fläche des Stielflansches 24, wird, sobald die Befestigungsschraube 26 durch den Halteflansch 12 und den Stiel 13 hindurchgesteckt ist, der Ausleger 4 mit seiner Widerlagerkante 21 an dem Stielflansch 24 außen anliegend gehalten.

Die Widerlagerkante 21 befindet sich, wie sich aus der Beschreibung ergibt, unterhalb des Schraubenbolzens 18, damit bei Belastung des Auslegers 4 von oben her durch eine Kraft, die bestrebt ist, den Ausleger 4 nach unten zu klappen, eine entsprechende Druckkraft von dem Widerlager 21 auf den Stielflansch 24 übertragen wird.

Der an dem Stiel 3 befestigte Ausleger 4 ist damit in der Lage, sowohl Querkräfte als auch Drehmomente in den Stiel 3 einzuleiten.

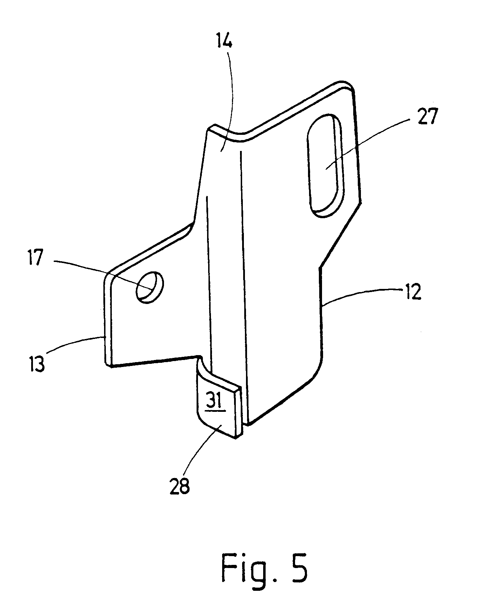

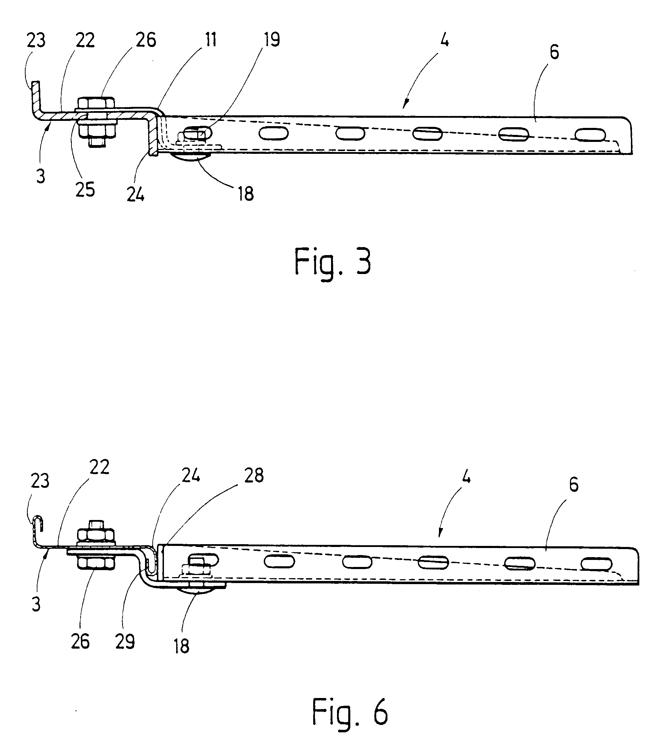

Falls ein Stiel 3 verwendet wird, der, wie Fig. 6 zeigt, dünnwandig ist und seine notwendige Biegesteifigkeit nur dadurch erhält, daß die Stielflansche 23 und 24 längs ihrer freien Kante nochmals nach innen umgefalzt sind, ist das in den Fig. 4 und 5 gezeigte Verbindungsstück 11 von Vorteil. Es gestattet nämlich, die von der Widerlagerkante ausgeübte Druckkraft auf einen größeren Bereich der Stielflansche 23 und 24 zu verteilen. Soweit in diesem Zusammenhang Bauteile und Elemente auftreten, die bereits vorher beschrieben sind, sind sie mit denselben Bezugszeichen versehen und nicht erneut erläutert. Das Verbindungsstück 11 nach den Fig. 4 und 6 trägt unterhalb des Halteflansches 13 eine Lasche 28, die durch U-förmiges Umbiegen eines entsprechenden Fortsatzes an dem Zwischenstück 14 gebildet ist und parallel und mit Abstand zu der dem Halteflansch 13 benachbarten Außenseite des Zwischenstückes 14 verläuft. Der Abstand, den die Lasche 28 von der Außenseite, d.h. der an den Halteflansch 13 angrenzenden Seite des Zwischenstückes 14 hat, entspricht der Stärke des Stielflansches 24 einschließlich der Stärke des eingefalzten Bereiches 29. Die Lage der Lasche 28 in vertikaler Richtung ist an die Höhe der Widerlagerkante 21 angepaßt, in der Weise, daß die von dem Stiel 3 wegweisende Fläche 31 der Lasche 28 mit der Widerlagerkante 21 zusammenwirken kann. Gemäß der hierdurch hervorgerufenen Verlagerung der Widerlagerkante 21 ist auch die Bohrung 17 in dem Halteflansch 13 von dem Zwischenstück 14 weggerückt.

Die Montage des Auslegers 4 mit Hilfe des Verbindungsstückes 11 nach den Fig. 4 und 5 ist in Fig. 6 gezeigt. Während bei dem vorherigen Ausführungsbeispiel nach Fig. 3 das Verbindungsstück 11 um die zwischen dem Steg 22 und dem Stielflansch 24 bzw. 23 gebildete Kante außen herum gelegt ist, befindet sich bei Fig. 6 der Halteflansch 12 und das Zwischenstück 14 an dem Stiel 3 in dem Kehlbereich, der zwischen dem Steg 22 und dem Stielflansch 24 entsteht; der Abstand zwischen dem Loch 27 und dem Zwischenstück 14 ist derart gewählt, daß wiederum die Befestigungsschraube 26 eingesetzt werden kann. Diese Art der Befestigung hat den Vorteil, daß die Kräfte unmittelbar in den Stielflansch 23, 24 eingeleitet werden und die Schraube 26 weniger belastet wird.

Bei dieser Art der Montage umgreift die Lasche 28 den Stielflansch 24 zusammen mit dem Zwischenstück 14 etwa gabelförmig von der Seite her. Da die Höhe der Lasche 28 der Lage der Widerlagerkante 21 entspricht, stützt sich der an dem Verbindungsstück 11 angebrachte Ausleger mit seiner Widerlagerkante 21 auf der Außenseite 31 der Lasche 28 ab. Hierdurch entsteht eine großflächige Belastung des Stielflansches 24, der auch bei geringer Wandstärke nicht eingedrückt werden kann. Die Tragfähigkeit ist entsprechend verbessert.

Um letzteres zu erreichen, spielt es keine Rolle, ob der Ausleger 4, wie in den Fig. 2 und 3 gezeichnet, mit der Innenseite seines Rückenteils 5 auf dem Halteflansch 13 aufliegt oder ob er, wie Fig. 6 bzw. auch Fig. 4 erkennen läßt, mit seiner Außenseite an dem Halteflansch 13 anliegt.

Zur Verstärkung des als Z-förmig gekröpftes Blechformteil ausgeführten Verbindungsstücks können noch Sicken 32, 33 vorgesehen sein, die sich über die Biegekanten, an denen die Halteflansche 12 und 13 mit dem Zwischenstück 14 zusammenhängen, hinaus erstrecken. Die Richtung, in der die Sicken 32, 33 erhoben sind, richtet sich danach, ob eine Montageart nach Fig. 3 oder Fig. 6 in Frage kommt.

Bei allen gezeigten Ausführungsformen können an der Baustelle die Art des Verbindungsstücks 11 und des verwendeten Trägers 4 frei gewählt und an die Geometrie des Stieles 3 auf diese Weise leicht angepaßt werden.

Eine herstellerseitige breite Lagerhaltung für alle Kombinationsmöglichkeiten, die eine starre unlösbare Verbindung zwischen dem Verbindungsstück 11 und dem Ausleger 4 mit sich bringen würde, entfällt.

Wiewohl die neue Anordnung nur in Verbindung mit Z-förmigen Stielen gezeigt ist, ist ohne weiteres klar, daß sie auch in Verbindung mit H-Stielen einzusetzen ist.

## Patentansprüche

1. Trag- oder Aufhängevorrichtung (1) für Kabel, Rohre u.dgl.,mit an Strukturen (2) von Gebäuden und ähnlichem vertikal anzubringenden länglichen Stielen (3), die einen über ihre Länge durchlaufenden gelochten Steg (22) aufweisen, an dessen Längskanten ebenfalls über die Länge durchgehende und zu dem Steg (22) rechtwinklige Stielflansche (23, 24) sich befinden, sowie mit zur Aufnahme der Kabel bzw. Rohre oder Kabelrinnen oder -pritschen vorgesehenen und an den Stielen (3) zu befestigenden horizontalen Auslegern (4) mit einem C- oder U-förmigem Querschnittsprofil, die ein vertikal sich erstreckendes Rückenteil (5) sowie zwei an dem Rückenteil angeformte und sich rechtwinklig zu diesem in dieselbe Richtung erstreckende Flansche (6, 7) aufweisen, und mit an einem Ende (8) der Ausleger (4) angebrachten und zum Anbringen der Ausleger (4) an den Stielen (3) vorgesehenen Verbindungsstück (11) das zwei Abschnitte (12, 13) aufweist, von denen der eine mit dem Stiel (12) zusammenwirkt und der andere ein parallel zu der durch den Steg (22) des Stiels (3) definierten Ebene von dem Stiel (3) wegstehender Halteflansch (13) ist, der zur Anlage an dem Rückenteil (5) des Auslegers (4) vorgesehen ist, dadurch gekennzeichnet, daß der Rückenteil (5) mit dem zugehörigen Halteflansch (13) über lediglich ein in der Nähe des oberen Flansches (6 ) des Auslegers (4 ) angeordnetes Verbindungselement (18) verbunden ist, das lediglich eine Scherkraft aufzunehmen vermag, und daß eine dem Stiel (3) benachbarte untere Kante des Auslegers (4) eine ein Kippmoment um das Verbindungselement (18) in dem Stiel (3) einleitende Widerlagerkante (21) bildet.

2. Vorrichtung nach Anspruch 1, dadurch gekennzeichnet, daß das Verbindungsstück (11) ein etwa Z-förmig gekröpftes Knotenblech mit zwei parallel zueinander ausgerichteten Abschnitten (12, 13) ist, von denen der eine einen an dem Ausleger (4) befestigten Halteflansch (13) und der andere den an dem Steg (22) des Stieles (3) zu befestigenden Halteflansch (12) bildet, und daß die beiden Halteflansche (12, 13) durch ein Zwischenstück (14), das rechtwinklig zu den beiden Halteflanschen (12, 13) verläuft, miteinander verbunden sind.

3. Vorrichtung nach Anspruch 1, dadurch gekennzeichnet, daß die Widerlagerkante (21) an dem unteren Flansch (7) des Auslegers (4) ausgebildet ist und rechtwinklig zu der Längsachse des Stiels (3) verläuft.

4. Vorrichtung nach Anspruch 1, dadurch gekennzeichnet, daß das Verbindungselement (18) ein bolzenförmiges Verbindungselement ist.

5. Vorrichtung nach Anspruch 4, dadurch gekennzeichnet, daß das bolzenartige Verbindungselement eine Schraube (18) ist.

6. Vorrichtung nach Anspruch 1, dadurch gekennzeichnet, daß das Verbindungsstück (11) an dem Steg (22) des Stieles (3) mit einer durch Löcher (25, 27) in dem Steg (3) und in dem Halteflansch (12) durchgehenden Schraube (26) befestigt ist.

7. Vorrichtung nach Anspruch 1, dadurch gekennzeichnet, daß das Verbindungsstück (11) und der Ausleger (4) aus Material unterschiedlicher Stärke und/oder unterschiedlichen Materials bestehen.

8. Vorrichtung nach Anspruch 7, dadurch gekennzeichnet, daß der Ausleger (4) ein Blechformteil ist, das eine geringere Wandstärke aufweist als das Verbindungsstück (11).

9. Vorrichtung nach Anspruch 1, dadurch gekennzeichnet, daß das Verbindungsstück (11) unterhalb des bolzenförmigen Verbindungselementes (18) eine zu dem Flansch (23, 24) des Stieles (3) parallel sich erstreckende Lasche (28) aufweist, die mit ihrer einen Seite an dem Flansch (23, 24) anliegt und deren andere, von dem Stiel (3) wegweisende Seite (31) eine Anlagefläche für die Widerlagerkante (21) des Auslegers (4) bildet.

10. Vorrichtung nach Anspruch 9, dadurch gekennzeichnet, daß die Lasche (28) parallel zu dem Zwischenstück (14) und im Abstand zu diesem angeordnet ist.

11. Vorrichtung nach Anspruch 1, dadurch gekennzeichnet, daß der Stiel (3) im Querschnitt Z-förmig ist.

12. Vorrichtung nach Anspruch 2, dadurch gekennzeichnet, daß das Knotenblech (11) in dem zwischen dem Steg (22) des Stiels (3) und einen Stielflansch (23, 24) definierten Kehlbereich eingelegt ist.

## Claims

1. Support or suspension means (1) for cables, tubings and the like, comprising a vertical elongate hangers (3) adapted to be secured to structures (2) of buildings and the like, which hangers (3) include a perforated web (22) extending over their length and are provided at their longitudinal edges with hanger flanges (23,24) extending over their length and at right angles to the web (22), arms (4) adapted to be mounted on the hangers (3) for supporting said cables and tubings, respectively, or cable trays or cable ladders, which arms (4) are each of a C-shaped or U-shaped cross section including a vertically extending base portion (5) as well as two flanges (6,7) integral with the base portion (5) and extending at right angles to the web (22), and connecting means (11) each attached at one end of one of said arms (4) for mounting said arm (4) on a hanger (3) and comprising two portions (12,13) of which one cooperates with the hanger (3) and the other provides a mounting flange (13) extending parallel to a plane defined by the hanger web (22) and directing away from the hanger (3), and being adapted to abut said base portion (5) of said hanger (3), which support or suspension means (1) is characterized in that said base portion (5) is connected to its associated mounting flange (13) solely by means of a connecting element (18) arranged adjacent to the upper flange (6) of said arm (4) and adapted to solely withstand a force parallel to said base portion (5) and in that a lower edge of said arm (4) adjacent to said hanger (3) provides an abutment edge introducing into said hanger (3) a torque about said connecting element (18).

2. Support means as defined in claim 1, wherein said connecting means (11) is in the form of jointing plate bent in a Z-shape and including two parallel extending portions (12,13), of which one portion provides a mounting flange (13) connected to said arm (4) and the other portion forms said mounting flange (12) which is arranged to be attached to said hanger (3), and wherein said two mounting flanges (12,13) are interconnected by an intermediate portion (14) extending at right angle relative to said mounting flanges (12,13).

3. Support means as defined in claim 1, wherein said abutment edge (21) is provided on the lower flange (7) of the arm (4) and extends at right angles to the longitudinal axis of said hanger (3).

4. Support means as defined in claim 1, wherein said connecting element (18) is a bolt like connecting element.

5. Support means as defined in claim 1, wherein said bolt like connecting element is a screw bolt (18).

6. Support means as defined in claim 1, wherein said connecting means (11) is secured to said hanger web (22) by means of a bolt (26) extending through bores (25,27) in said hanger (3) and in said mounting flange (12).

7. Support means as defined in claim 1, wherein said connecting means (11) and said arm (4) are of different thickness and/or of different materials.

8. Support means as defined in claim 7, wherein said arm (4) is a stamped metal sheet the thickness of which is less than the thickness of said connecting means (11).

9. Support means as defined in claim 1, wherein said connecting means (11) is provided with a tab (28) extending parallel to one of said flanges (23,24) of said hanger (3) below said bolt-like connecting element (18), which tap (28) abuts said flange with one of its side faces and provides by its other side face directed away from said hanger (3) an abutment surface for said abutment edge (21) of said arm (4).

10. Support means as defined in claim 9, wherein said tap (28) is arranged in spaced parallel relationship to said intermediate portion (14).

11. Support means as defined in claim 1, wherein said hanger (3) has a Z-shaped cross section.

12. Support means as defined in claim 1, wherein said jointing plate (11) is introduced into a channel portion defined by the web (22) of said hanger (3) and one of said hanger flanges (23,24).

## Revendications

1. Dispositif de support ou de suspension (1) pour des câbles, des tubes et analogues comportant des mâts (3) allongés à fixer verticalement sur des structures (2) de bâtiment ou analogue qui présentent une âme (22) perforée qui s'étend sur l'ensemble de leur longueur et sur les grands côtés de laquelle sont disposées des ailes (23, 24) qui s'étendent également sur l'ensemble de la longueur des mâts, des bras (4) horizontaux qui sont destinés à recevoir des câbles, des tubes, des goulottes ou des tablettes à câbles, se fixent sur les mâts (3), ont en section transversale un profil en C ou en U et présentent une partie dos (5) verticale et deux ailes (6, 7) attenantes à la partie arrière qui s'étendent perpendiculairement à celle-ci mais dans la même direction, une pièce de liaison (11) qui est disposée à une extrémité (8) des bras (4) et est destinée au montage des bras (4) sur les mâts (3), laquelle pièce de liaison présente deux parties (12, 13) parmi lesquelles l'une coopère avec le mât (3) et l'autre est une aile (13) de fixation parallèle au plan défini par l'âme (22) du mât (3) qui est disposée à distance de celui-ci et sert d'appui sur la partie dos (5) du bras (4), caractérisé par le fait que la partie dos (5) est liée à son aile de fixation (13) associée par un élément de fixation (18) unique disposé au voisinage de l'aile supérieure (6) du bras (4), lequel élément de fixation supporte exclusivement une force de cisaillement et par le fait qu'une arête du bras (4) inférieur voisine du mât (3) constitue un contre-appui (21) qui introduit dans le mât (3) un moment de basculement autour de l'élément de fixation (18).

2. Dispositif selon la revendication 1, caractérisé par le fait que la pièce de liaison (11) est une tôle d'assemblage contre-coudée sensiblement en forme de Z avec deux parties (12, 13) parallèles entre elles parmi lesquelles l'une constitue une aile de fixation (13) qui est fixée sur le bras (4) et l'autre l'aile de fixation (12) à fixer sur l'âme (22) du mât (3) et par le fait que les deux ailes de fixation (12, 13) sont reliées entre elles par une partie intermédiaire (14) perpendiculaire auxdites deux ailes de fixation (12, 13).

3. Dispositif selon la revendication 1, caractérisé par le fait que le contre-appui (21) est agencé sur l'aile inférieure (7) du bras (4) et est perpendiculaire à l'axe longitudinal du mât (3).

4. Dispositif selon la revendication 1, caractérisé par le fait que l'élément de fixation (18) est un élément en forme de cheville.

5. Dispositif selon la revendication 1, caractérisé par le fait que l'élément de fixation en forme de cheville est une vis (18).

6. Dispositif selon la revendication 1, caractérisé par le fait que la pièce de liaison (11) est fixée sur l'âme (22) du mât (3) au moyen d'une vis (26) qui pénètre dans des trous (25, 27) dans l'âme (22) et dans l'aile de fixation (12).

7. Dispositif selon la revendication 1, caractérisé par le fait que la pièce de liaison (11) et le bras (4) sont en des matériaux présentant des résistances mécaniques différentes et/ou en des matériaux différents.

8. Dispositif selon la revendication 7, caractérisé par le fait que le bras (4) est une pièce en tôle façonnée qui a une épaisseur de paroi plus faible que la pièce de liaison (11).

9. Dispositif selon la revendication 1, caractérisé par le fait que, au-dessous de l'élément de fixation (18) en forme d'axe, la pièce de liaison (11) présente une patte (28) qui est parallèle à l'aile (23, 24) du mât (3) et qui par l'une de ses faces est appliquée contre l'aile (23, 24) et par son autre face (31) éloignée du mât (3) forme une surface d'appui pour le contre-appui (21) du bras (4).

10. Dispositif selon la revendication 9, caractérisé par le fait que la patte (28) est disposée parallèlement à la partie intermédiaire (14) et à distance de celle-ci.

11. Dispositif selon la revendication 1, caractérisé par le fait que le mât (3) a en section transversale une forme de Z.

12. Dispositif selon la revendication 2, caractérisé par le fait que la tôle d'assemblage (11) est placée dans la gorge formée entre l'âme (22) du mât (3) et une aile (23, 24) de ceelui-ci.
